# EUROPÄISCHE PATENTSCHRIFT

(11) **EP 2 898 811 B1**
(45) Veröffentlichungstag und Bekanntmachung des Hinweises auf die Patenterteilung: **04.01.2017**
(21) Anmeldenummer: 15151065.8
(22) Anmeldetag: 14.01.2015
(51) Int. Cl.: A47L 15/42, D06F 39/08, F04D 13/06, F04D 29/20, F16D 1/108, F16D 1/10

(54) **Flüssigkeitsabführpumpe und Haushaltsgerät mit einer solchen Pumpe**
Fluid discharge pump and household appliance comprising such a pump
Pompe d'évacuation d'un liquide et appareil domestique avec une telle pompe

(30) Priorität: 22.01.2014 CN 201420040751 U
(43) Veröffentlichungstag der Anmeldung: 29.07.2015
(73) Patentinhaber: BSH Hausgeräte GmbH, 81739 München (DE)
(72) Erfinder: Eisert, Horst, 97297 Waldbuettelbrunn (DE); Li, Zhengwei, 210000 Nanjing (CN)

(56) Entgegenhaltungen:
- EP-A2- 2 455 614
- DE-A1- 4 217 457
- DE-A1- 19 907 556
- DE-A1-102008 055 022
- DE-A1-102010 040 288
- DE-T2- 69 716 155

## Beschreibung

### Gebiet der Erfindung

Die vorliegende Erfindung betrifft eine Pumpe zum Abführen einer Flüssigkeit, insbesondere eine Entwässerungspumpe.

Die vorliegende Erfindung betrifft ferner ein Haushaltsgerät mit einer solchen Pumpe, insbesondere ein Geschirrspüler oder eine Waschmaschine.

### Technischer Hintergrund

Bei den bestehenden, in herkömmlicher Weise aufgebauten Pumpen zum Abführen einer Flüssigkeit führt die Antriebswelle zusammen mit dem Rotor des Elektromotors in der Rotorkammer eine Drehbewegung durch, während sich das Flügelrad der Pumpe in der Hydraulikkammer dreht. Näheres hierzu findet sich in der europäischen Patentanmeldung EP 2455614 A2. Das Flügelrad ist in der Regel direkt an der Drehwelle eines Elektromotors angebracht. Aus dem Stand der Technik ist allerdings bekannt, das Flügelrad über ein Verbindungselement an die Drehwelle eines Elektromotors anzubauen, wie dies z.B. in der europäischen Patentanmeldung EP 0800012 B1 beschrieben ist. So lässt sich das Rotormodul ungeachtet der Bauweise des Flügelrades problemlos in den Elektromotor einbauen, ohne dabei negative Einflüsse auf den Montagevorgang des Elektromotors auszuüben. Bei einer Ausgestaltung, bei der das Flügelrad über ein Verbindungselement an der Drehwelle eines Elektromotors angebracht ist, kann jedoch oft die Zuverlässigkeit der gegenseitigen Verbindungen nicht sichergestellt und die Drehzahl des Flügelrades beeinträchtigt werden.

Die DE 42 17 457 A1 beschreibt eine Motorpumpe mit einem Gehäuse, einer Hohlwelle und einem Impellerrad, das mittels zweier im Querschnitt keilförmiger Ringe auf einer Hohlwelle aufgespannt ist. Die DE 10 2010 040 288 A1 beschreibt einen Rotor mit einer Welle, auf deren Stirnseite ein Laufrad mittels einer Dehnschraube aufgespannt ist. Die DE 697 16 155 T2 beschreibt eine Anordnung zur Verbindung eines Laufrades mit einer drehbaren Welle, wobei das Laufrad mittels einer Hülse an der Welle befestigt ist. Die DE 10 2008 055 022 A1 beschreibt ein Verfahren zum Abpumpen einer Flüssigkeit aus einem wasserführenden Haushaltsgerät. Die EP 2 455 614 A2 beschreibt eine Pumpe zur Förderung von Flüssigkeit. Die DE 199 07 556 A1 beschreibt eine Flüssigkeitspumpe für Haushaltsgeräte.

### Offenbarung der Erfindung

Die Aufgabe der vorliegenden Erfindung besteht darin, eine strukturell verbesserte Flüssigkeitsabführpumpe anzubieten, mit der die Robustheit der Montagestruktur und ein Normalbetrieb des Flügelrades einer Flüssigkeitsabführpumpe gewährleistet werden können.

Erfindungsgemäß wird die Aufgabe gelöst durch eine Flüssigkeitsabführpumpe mit einem Motorraum, einem Elektromotor, der eine Antriebswelle aufweist und sich in dem Motorraum befindet, sowie einem Flügelrad und einem Verbindungsstück, wobei das Flügelrad über das Verbindungsstück an der Antriebswelle angebracht ist und eine Aussparung zur dichten Aufnahme des Verbindungsstückes aufweist, während das Verbindungsstück über ein Durchgangsloch zur Aufnahme der Antriebswelle verfügt, wobei das Verbindungsstück ein hohl ausgebildetes Zylinderteil und ein Scheibenteil umfasst, und wobei sich das Durchgangsloch in der Mitte des Scheibenteils befindet, das Zylinderteil dicht in der Aussparung des Flügelrades aufgenommen ist. Die Flüssigkeitsabführpumpe zeichnet sich dadurch aus, dass an einer Außenfläche des Zylinderteils ein Rastteil und in dem Flügelrad eine auf das Rastteil abgestimmte und zur dichten Aufnahme des Rastteils dienende Rastnut ausgebildet ist und an dem Verbindungsstück ein Zapfen ausgebildet ist, der an dem Scheibenteil ausgebildet ist und der sich axial in Richtung auf das Flügelrad erstreckt, und in dem Flügelrad eine Bohrung zur dichten Aufnahme des Zapfens ausgebildet ist.

In einer Weiterbildung der Erfindung wird das Rastteil in einer Anzahl von mehr als zwei bereitgestellt und ist in Umfangsrichtung gleichmäßig an einer Außenumfangsfläche des Zylinders verteilt.

In einer Weiterbildung der Erfindung umfasst das Rastteil eine erste und eine zweite Stufe.

In einer Weiterbildung der Erfindung liegt die Außenfläche des Zylinderteils dicht an einer Innenseite der Aussparung und eine Endfläche des Zylinderteils dicht an einer Bodenfläche der Aussparung an.

In einer Weiterbildung der Erfindung wird der Zapfen in einer Anzahl von mehr als zwei bereitgestellt und ist in Umfangsrichtung gleichmäßig an dem Scheibenteil verteilt.

Die Erfindung schlägt weiter ein mit Wasser betriebenes Haushaltsgerät, insbesondere einen Geschirrspüler oder eine Waschmaschine, vor, das eine Pumpe zum Abführen einer Flüssigkeit gemäß einer der vorangehenden Ausgestaltungen umfasst.

Mit der vorliegenden Erfindung können vorteilhafterweise eine gegenüber dem Stand der Technik sicherere Verbindung zwischen Flügelrad und Verbindungsstück und damit eine unbeeinträchtigte Betriebsgeschwindigkeit des Flügelrades nach dessen Montage und eine betriebsmäßige Ablassleistung der ganzen Flüssigkeitsabführpumpe erreicht werden.

Nachfolgend wird die Erfindung anhand eines am meisten bevorzugten Ausführungsbeispiels, in dem das mit Wasser betriebene Haushaltsgerät als Geschirrspüler ausgeführt ist, näher beschrieben. Dies ist aber nicht damit gleichzusetzen, dass der Schutzumfang der Erfindung nur auf Geschirrspüler beschränkt ist.

### Darstellung der Abbildungen

### Es zeigen

FIG 1 den schematischen Aufbau eines Haushaltsgeschirrspülers gemäß einem am meisten bevorzugten Ausführungsbeispiel der Erfindung,
FIG 2 den schematischen Aufbau einer erfindungsgemäßen Flüssigkeitsabführpumpe,
FIG 3 in explodierter Darstellung den Aufbau eines erfindungsgemäßen Flügelrades und
FIG 4 einen Längsschnitt durch ein erfindungsgemäßes Flügelrad.

### Konkrete Ausführungsformen

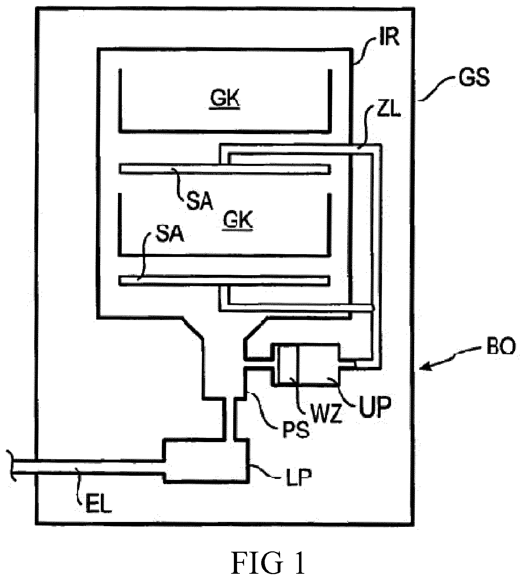

Der in FIG 1 dargestellte Geschirrspüler GS umfasst einen als Waschbehälter dienenden Innenraum IR, der durch eine Tür (nicht bezeichnet) öffen- bzw. schließbar ist, wobei die Tür zum Zweck der Be- oder Entladung schwenkbar an dem Geschirrspüler GS angeschlossen ist. In dem Innenraum IR des Geschirrspülers GS ist ein Geschirrkorb GK zur Aufnahme eines zu reinigenden Gegenstandes angeordnet, welcher aus dem Innenraum IR des Geschirrspülers GS herausnehmbar ist, um die Be- oder Entladung zu vereinfachen.

Zum Reinigen des in dem Geschirrkorb GK gelagerten, zu reinigenden Gegenstands ist in dem Innenraum IR des Geschirrspülers GS eine Sprüheinrichtung in Form eines Sprüharms SA zum Aufbringen eines Fluids auf den zu reinigenden Gegenstand eingebaut, wobei es sich bei dem Fluid um mit z.B. einem Reinigungs- oder Spülmittel vermengtes Wasser handeln kann, um eine Reinigung und/oder eine fleckenlose Trocknung des zu reinigenden Gegenstands zu ermöglichen. Darüber hinaus wird das von dem zu reinigenden Gegenstand herabtropfende Fluid in einem Pumpensumpf PS gesammelt, der sich in einem Bodenbereich des Innenraums IR des Geschirrspülers GS befindet. In dem Pumpensumpf PS ist ferner eine Filtereinrichtung (nicht bezeichnet) eingebaut, mit der sich Verunreinigungen oder Partikel aus dem zirkulierenden Fluid heraustrennen lassen.

Weiterhin ist der Sprüharm SA über eine Zuleitung ZL mit einer Umwälzpumpe UP strömungsverbunden, die sich in der Nähe der übrigen Geschirrspüler-Bauteile eines unterhalb des Innenraums IR des Geschirrspülers GS angeordneten Bodenteils BO befindet. Beim Betrieb der Umwälzpumpe UP wird das in dem Pumpensumpf PS gesammelte Fluid durch die Umwälzpumpe UP angesaugt und über die Zuleitung ZL dem Sprüharm SA zugeführt. In diesem beispielhaften Ausführungsbeispiel umfasst die Umwälzpumpe UP eine integrierte Wasserheizung WZ, um das durch die Umwälzpumpe UP strömende Fluid zu erwärmen. Alternativ dazu kann bzw. können auch eine separate Dauerheizung oder anderweitige Wasserheizungen bereitgestellt werden, um das Fluid zu erwärmen. Überdies ist in dem Geschirrspüler GS eine Pumpe zum Abführen einer Flüssigkeit LP, insbesondere zum Abführen einer im Innenraum IR des Geschirrspülers GS befindlichen Flüssigkeit, vorgesehen, die sowohl mit dem Pumpensumpf PS als auch mit einer Entwässerungsleitung EL eines Haushaltsabwasser-Abflussnetzes strömungsverbunden sein kann.

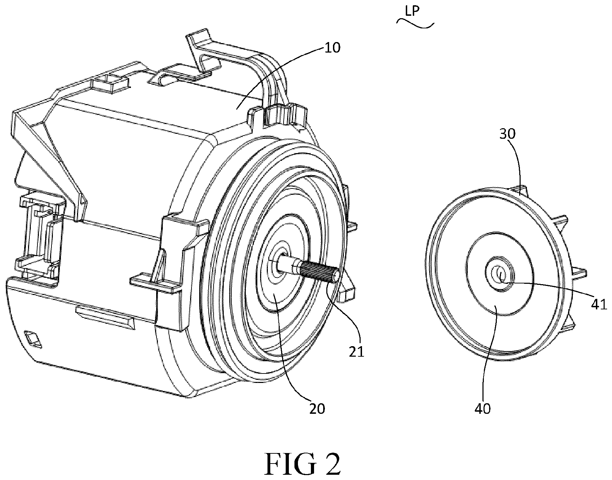

Wie aus FIG 2 ersichtlich ist, umfasst die Pumpe zum Abführen einer Flüssigkeit LP, insbesondere zum Abführen einer im Innenraum IR des Geschirrspülers befindlichen Flüssigkeit, einen Motorraum 10, in dem ein mit einer Drehwelle 21 versehener Elektromotor 20 eingebaut ist. An einem aus dem Motorraum 10 herausragenden Ende der Drehwelle 21 ist ein Flügelrad 30 angebracht, wobei die Anbringung durch ein Verbindungsstück 40 erfolgt, das ein Durchgangsloch 41 aufweist. Beim Anbau des Verbindungsstückes 40 an die Drehwelle 21 greift diese dicht in das Durchgangsloch 41 ein, um das Verbindungsstück 40 sicher an der Drehwelle 21 zu befestigen. Anschließend wird das Flügelrad 30 an das Verbindungsstück 40 und damit an die Drehwelle 21 angebracht. Beim Betrieb des Elektromotors 20 wird das Flügelrad 30 durch die Drehwelle 40 in eine Drehbewegung mit hoher Geschwindigkeit gebracht, um die Flüssigkeit abzuführen.

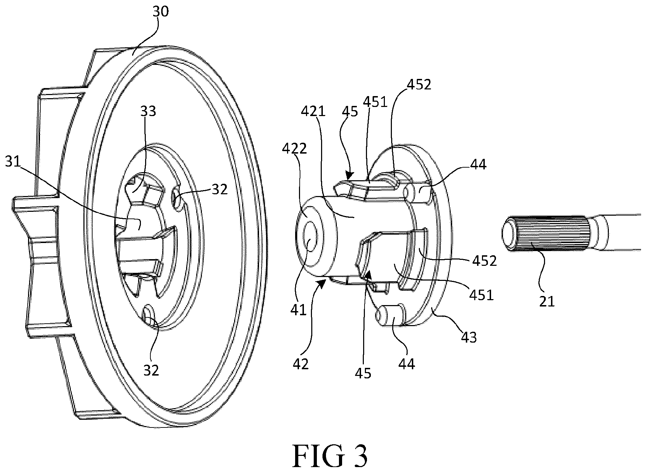

Wie in FIG 3 gezeigt ist, umfasst das Verbindungsstück 40 ein mit dem Durchgangsloch 41 versehenes Zylinderteil 42 und ein damit einteilig ausgebildetes Scheibenteil 43. An einer Außenfläche 421 des Zylinderteils 41 ist ein Rastteil 45 ausgebildet, das eine erste Stufe 451 und eine zweite Stufe 452 umfasst. Es sind mehrere derartige Rastteile 45 vorgesehen, welche in Umfangsrichtung gleichmäßig an der Außenfläche 421 des Zylinderteils verteilt sind. In dem Flügelrad 30 ist eine auf das Rastteil 45 abgestimmte Rastnut 33 ausgebildet, die zur dichten Aufnahme des Rastteils 45 dient, um einen dichten Rastverschluss zu realisieren. An dem Scheibenteil 43 ist ein sich axial in Richtung auf das Flügelrad 30 erstreckender Zapfen 44 ausgebildet. Es sind auch mehrere solche Zapfen 44 vorhanden, die in Umfangsrichtung gleichmäßig an dem Scheibenteil 43 verteilt sind. In dem Flügelrad 30 ist ferner eine auf den Zapfen 44 abgestimmte Bohrung 32 ausgebildet, die zur dichten Aufnahme des Zapfens 44 dient.

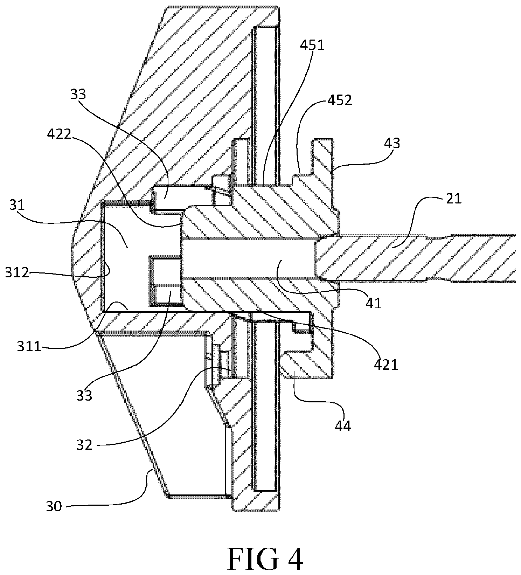

Wie aus FIG 4 hervorgeht, ist das Durchgangsloch 41 des Verbindungsstückes 40 so ausgebildet, dass es sich durch das Zylinderteil 42 und das Scheibenteil 43 des Verbindungsstückes hindurch erstreckt und auf einer Mittellinie des Verbindungsstückes befindet. Beim Anbau des Verbindungsstückes 40 an die Drehwelle 21 und des Flügelrades 30 an das Verbindungsstück 40 kommt jeweils die Außenfläche 421 des Zylinderteils 42 des Verbindungsstückes zur dichten Anlage an eine Innenseite 311 einer Aussparung 31 und eine Endfläche 422 des Zylinderteils 42 zur dichten Anlage an eine Bodenfläche 312 der Aussparung 31. Zudem ist die Rastnut 33 so geformt und ausgebildet, dass sie die erste Stufe 451 und die zweite Stufe 452 des Rastteils 45 aufnehmen kann. Durch das Zusammenwirken von Zapfen 44 und Bohrung 32 sowie von Rastteil 45 und Rastnut 33 können eine sicherere Verbindung zwischen Flügelrad 30 und Verbindungsstück 40 und damit eine unbeeinträchtigte Betriebsgeschwindigkeit des Flügelrades 30 nach dessen Montage und eine betriebsmäßige Ablassleistung der ganzen Flüssigkeitsabführpumpe erreicht werden.

Das oben Beschriebene stellt keine Einschränkung des Schutzumfangs der Erfindung dar, sondern dient lediglich der näheren Erläuterung möglicher Ausführungsformen der Erfindung. Jede gleichwertige Ausführung oder Variation, welche von den Grundideen der Erfindung ausgeht, ist daher vom Schutzumfang der vorliegenden Erfindung umfasst.

### Bezugszeichenliste

- 10: Motorraum
- 20: Elektromotor
- 21: Drehwelle
- 30: Flügelrad
- 31: Aussparung
- 32: Bohrung
- 33: Rastnut
- 40: Verbindungsstück
- 41: Durchgangsloch
- 42: Zylinderteil
- 421: Außenfläche
- 422: Endfläche
- 43: Scheibenteil
- 44: Zapfen
- 45: Rastteil
- 451: Erste Stufe
- 452: Zweite Stufe
- L1: Axiales Spiel
- L2: Radiales Spiel
- GS: Geschirrspüler
- BO: Bodenteil
- IR: Innenraum
- GK: Geschirrkorb
- SA: Sprüharm
- PS: Pumpensumpf
- WZ: Wasserheizung
- UP: Umwälzpumpe
- LP: Pumpe zum Abführen einer Flüssigkeit
- EL: Entwässerungsleitung
- ZL: Zuleitung

## Patentansprüche

1. Flüssigkeitsabführpumpe, umfassend
- einen Motorraum (10),
- einen Elektromotor (20), der eine Antriebswelle aufweist und sich in dem Motorraum (10) befindet,
- ein Flügelrad (30) und ein Verbindungsstück (40), wobei das Flügelrad (30) über das Verbindungsstück (40) an der Antriebswelle (21) angebracht ist und eine Aussparung (31) zur dichten Aufnahme des Verbindungsstückes (40) aufweist, während das Verbindungsstück (40) über ein Durchgangsloch (41) zur Aufnahme der Antriebswelle (21) verfügt, wobei das Verbindungsstück (10) ein hohl ausgebildetes Zylinderteil (42) und ein Scheibenteil (43) umfasst, und wobei
- sich das Durchgangsloch (41) in der Mitte des Scheibenteils (43) befindet,
- das Zylinderteil (42) dicht in der Aussparung (31) des Flügelrades aufgenommen ist,
**dadurch gekennzeichnet, dass** an einer Außenfläche (421) des Zylinderteils (42) ein Rastteil (45) und in dem Flügelrad (30) eine auf das Rastteil (45) abgestimmte und zur dichten Aufnahme des Rastteils (45) dienende Rastnut (33) ausgebildet ist und an dem Verbindungsstück (40) ein Zapfen (44) ausgebildet ist, der an dem Scheibenteil (43) ausgebildet ist und der sich axial in Richtung auf das Flügelrad (30) erstreckt, und in dem Flügelrad (40) eine Bohrung (32) zur dichten Aufnahme des Zapfens (44) ausgebildet ist.

2. Flüssigkeitsabführpumpe gemäß Anspruch 1, **dadurch gekennzeichnet, dass** das Rastteil (45) in einer Anzahl von mehr als zwei bereitgestellt wird und in Umfangsrichtung gleichmäßig an einer Außenumfangsfläche des Zylinders (42) verteilt ist.

3. Flüssigkeitsabführpumpe gemäß Anspruch 1 oder 2, **dadurch gekennzeichnet, dass** das Rastteil (45) eine erste Stufe (451) und eine zweite Stufe (452) umfasst.

4. Flüssigkeitsabführpumpe gemäß Anspruch 1, **dadurch gekennzeichnet, dass** die Außenfläche (421) des Zylinderteils (42) dicht an einer Innenseite (311) der Aussparung (31) und eine Endfläche (422) des Zylinderteils (42) dicht an einer Bodenfläche (312) der Aussparung (31) anliegt.

5. Flüssigkeitsabführpumpe gemäß Anspruch 1, **dadurch gekennzeichnet, dass** der Zapfen (44) in einer Anzahl von mehr als zwei bereitgestellt wird und in Umfangsrichtung gleichmäßig an dem Scheibenteil (43) verteilt ist.

6. Mit Wasser betriebenes Haushaltsgerät, **dadurch gekennzeichnet, dass** es eine Flüssigkeitsabführpumpe (LP) gemäß einem der vorangehenden Ansprüche umfasst.

7. Mit Wasser betriebenes Haushaltsgerät gemäß Anspruch 6, **dadurch gekennzeichnet, dass** es ein Geschirrspüler (GS) oder eine Waschmaschine ist.

## Claims

1. Fluid discharge pump, comprising
- a motor compartment (10),
- an electric motor (20), which has a drive shaft and is located in the motor compartment (10),
- an impeller (30) and a connecting piece (40), wherein the impeller (30) is attached by way of the connecting piece (40) to the drive shaft (21) and has a recess (31) for the sealed reception of the connecting piece (40), while the connecting piece (40) has a through hole (41) for receiving the drive shaft (21), wherein the connecting piece (10) comprises a hollow cylinder part (42) and a disc part (43) and wherein
- the through hole (41) is located in the centre of the disc part (43),
- the cylinder part (42) is received in the recess (31) of the impeller in a sealed manner, **characterised in that** a latching piece (45) is embodied on an outer surface (421) of the cylinder part (32) and a latching groove (33) which is matched to the latching piece (45) and serves to receive the latching piece (45) in a sealed manner is embodied in the impeller (30) and a pin (44) which is embodied on the disc part (43) and extends in the axial direction toward the impeller (30) is embodied on the connecting piece (40), and a borehole (32) for receiving the pin (44) in a sealed manner is embodied in the impeller (40).

2. Fluid discharge pump according to claim 1, **characterised in that** the latching piece (45) is provided in a number of more than two and in the peripheral direction is distributed uniformly on an outer peripheral surface of the cylinder (42).

3. Fluid discharge pump according to claim 1 or 2, **characterised in that** the latching piece (45) comprises a first stage (451) and a second stage (452).

4. Fluid discharge pump according to claim 1, **characterised in that** the outer surface (421) of the cylinder part (42) rests closely on an interior (311) of the recess (31) and an end surface (422) of the cylinder part (42) rests closely on a bottom area (312) of the recess (31).

5. Fluid discharge pump according to claim 1, **characterised in that** the pin (44) is provided in a number of more than two and in the peripheral direction is distributed uniformly on the disc part (43).

6. Household appliance operated with water, **characterised in that** it comprises a fluid discharge pump (LP) according to one of the preceding claims.

7. Household appliance operated with water according to claim 6, **characterised in that** it is a dishwasher (GS) or a washing machine.

## Revendications

1. Pompe d'évacuation de liquide comprenant
- un compartiment moteur (10),
- un moteur électrique (20) qui présente un arbre d'entrainement et se situe dans le compartiment moteur (10),
- une roue à ailettes (30) et un élément d'assemblage (40), dans laquelle la roue à ailettes (30) est apposée sur l'arbre d'entrainement (21) via l'élément d'assemblage (40) et un évidement (31) pour l'accueil étanche de l'élément d'assemblage (40), tandis que l'élément d'assemblage (40) dispose d'un orifice de passage (41) pour l'accueil de l'arbre d'entrainement (21), dans laquelle l'élément d'assemblage (10) comprend une pièce cylindrique creuse (42) et une pièce circulaire (43), et dans laquelle
- l'orifice de passage (41) se situe au milieu de la pièce circulaire (43),
- la pièce cylindrique (42) est accueillie de manière étanche dans l'évidement (31) de la roue à ailettes, **caractérisée** en ce **qu**'une pièce d'encliquètement (45) et, dans la roue à ailettes (30), une rainure d'encliquètement (33) correspondant à la pièce d'encliquètement (45) et servant à l'accueil étanche de la pièce d'encliquètement (45) est exécutée sur une surface extérieure (421) de la pièce cylindrique (42) et un tenon (44) est exécuté sur l'élément d'assemblage (40), lequel tenon est exécuté sur la pièce circulaire (43) et s'étend axialement en direction de la roue à ailettes (30) et un alésage (32) pour l'accueil étanche du tenon (44) est exécuté dans la roue à ailettes (40).

2. Pompe d'évacuation de liquide selon la revendication 1, **caractérisée en ce que** la pièce d'encliquètement (45) est mise à disposition selon un nombre supérieur à deux et est répartie de manière régulière dans le sens périmétrique sur une surface périmétrique extérieure du cylindre (42).

3. Pompe d'évacuation de liquide selon la revendication 1 ou 2, **caractérisée en ce que** la pièce d'encliquètement (45) comprend un premier cran (451) et un deuxième cran (452).

4. Pompe d'évacuation de liquide selon la revendication 1, **caractérisée en ce que** la surface extérieure (421) de la pièce cylindrique (42) est contiguë à un côté intérieur (311) de l'évidement (31) et une surface terminale (422) de la pièce cylindrique (42) est contiguë à une surface de fond (312) de l'évidement (31).

5. Pompe d'évacuation de liquide selon la revendication 1, **caractérisée en ce que** le tenon (44) est mis à disposition selon un nombre supérieur à deux et est réparti de manière régulière dans le sens périmétrique sur la pièce circulaire (43).

6. Appareil ménager à eau, **caractérisé en ce qu'**il comprend une pompe d'évacuation de liquide (LP) selon l'une des revendications précédentes.

7. Appareil ménager à eau selon la revendication 6, **caractérisé en ce qu'**il s'agit d'un lave-vaisselle (GS) ou d'un lave-linge.
